# FASCICULE DE BREVET EUROPEEN

(11) **EP 2 242 914 B1**
(45) Date de publication et mention de la délivrance du brevet: **27.03.2019**
(21) Numéro de dépôt: 08862436.6
(22) Date de dépôt: 15.12.2008
(51) Int. Cl.: F02B 23/06, F02B 3/06

(54) **PISTON POUR MOTEUR À COMBUSTION INTERNE À INJECTION DIRECTE**
KOLBEN FÜR BRENNKRAFTMASCHINE MIT DIREKTEINSPRITZUNG
PISTON FOR DIRECT-INJECTION INTERNAL COMBUSTION ENGINE

(30) Priorité: 19.12.2007 FR 0759986
(43) Date de publication de la demande: 27.10.2010
(73) Titulaire: Renault S.A.S., 92100 Boulogne-Billancourt (FR)
(72) Inventeur: BESSON, Magali, F-91530 Le Val Saint Germain (FR); GIACOMELLO, Gérard, F-91590 Guigneville (FR); RAMPANARIVO, Fano, F-92160 Antony (FR)
(86) Numéro de dépôt international: PCT/EP2008/067520
(87) Numéro de publication internationale: WO 2009/077493

(56) Documents cités:
- CN-Y- 2 721 886
- FR-A- 2 818 325
- FR-A- 2 881 182
- JP-U- H04 116 631
- US-A1- 2006 070 603

## Description

L'invention concerne, de façon générale, la conception des moteurs thermiques, en particulier des moteurs à combustion interne et à allumage par compression.

Les normes de dépollution imposées aux constructeurs automobile sont de plus en plus sévères, chaque changement, de norme ayant pour conséquence des développements techniques importants et l'utilisation de dispositifs de dépollution supplémentaires et/ou plus complexes qui se révèlent coûteux.

Les futures normes incitent les constructeurs à surtout réduire le niveau d'émission à l'échappement d'oxydes d'azote et de particules, notamment afin de ne pas obstruer trop rapidement les filtres à particules, les constructeurs souhaitant dans le même temps augmenter, sinon au moins maintenir le niveau de performances et d'agrément du moteur.

Des solutions généralement utilisées pour augmenter la dépollution des moteurs consistent par exemple à recourir à des dispositifs de post-traitement avancés, tels que des filtres à particules ou bien modifier les spécifications de la recixculation de gaz d'échappement connue sous son acronyme anglais EGR, qui grèvent la rentabilité des moteurs.

La présente invention a pour but de proposer une chambre de combustion améliorée, et qui permet notamment de réduire le niveau d'émission à l'échappement d'oxydes d'azote et de particules.

L'invention a pour objet un piston pour moteur à combustion interne, notamment pour moteur diesel, comprenant un corps délimité latéralement par une jupe apte à coopérer avec les parois d'un cylindre d'axe de révolution C dans lequel le piston est apte à coulisser selon cet axe C, le dit piston comportant une face frontale qui comprend un téton central, une couronne périphérique et un bol d'axe de révolution B qui s'étend du téton central vers la couronne périphérique à laquelle elle se raccorde au niveau d'une lèvre d'épaisseur Ep, ledit bol comprenant sensiblement à l'aplomb de la lèvre, un tore de profil, de préférence en cul-de-four, de rayon maximal Rt apte à guider un carburant injecté sous la lèvre au niveau d'une zone de réentrant R vers le téton central, du type décrit et représenté dans les documents CN 2 721 886, JP H04 116631, et US2006/070603.
- Afin de limiter les interactions des jets de carburants projetés vers le fond du bol avec le téton central et notamment son sommet, en permettant de réduire les émissions de fumées et de carburant imbrûlé, et afin de permettre d'extraire les suies formées par la combustion au fond du bol vers le téton central pour une post-oxydation améliorée conduisant à une réduction des fumées, l'invention propose un piston du type mentionné ci-dessus, caractérisé en ce que le sommet du téton situé sur l'axe de révolution B du bol s'élève à une hauteur inférieure d'une distance Dt sous le niveau de la couronne périphérique comprise entre 5,4mm et 8mm et de préférence sensiblement égale à 7,2mm, en ce que le téton central présente une pente vers le tore d'angle A pris à partir de l'axe de révolution B du bol dans le sens géométrique et compris entre 65° et 65, 7° et est de préférence sensiblement égal à 65°, et en ce que la profondeur maximale P du bol est comprise entre 14,8mm et 16,2mm et de préférence sensiblement égale à 16,2mm.

La mise en oeuvre d'un piston selon l'invention permet notamment d'atteindre les avantages suivants :
- on évite de rendre les systèmes de post-traitement, plus complexes et plus coûteux;
- on réduit les émissions d'oxydes d'azote pour le passage de normes de dépollution.

Suivant des modes particuliers de réalisation, le piston comporte l'une ou plusieurs des caractéristiques suivantes :
- le bol est centré dans le cylindre, l'axe de révolution B du bol étant confondu avec l'axe de révolution C du cylindre ;
- l'épaisseur Ep de la lèvre est comprise entre 4mm et 6mm et de préférence sensiblement égale à 5,3mm ;
- le rayon de courbure maximal Rt du tore est compris entre 5mm et 7mm et de préférence sensiblement égal à 6mm ;
- la lèvre est située à une distance De/2 de l'axe de révolution B du bol, la distance De étant comprise entre 49, 6mm et 51, 5mm et de préférence sensiblement égale à 50mm;
- le tore est situé à une distance Db/2 de l'axe de révolution B du bol, la distance Db étant comprise entre 53, 8mm et 55,4mm et de préférence sensiblement égale à 54mm ;
- la différence des distances, par rapport à l'axe de révolution B du bol, de l'extrémité de la couronne De/2 et de l'extrémité du tore Db/2 est sensiblement égale à 2mm.

L'invention a également pour objet un moteur à combustion interne adapté à des normes de dépollution strictes quant aux émission d'oxydes d'azote et de particules et plus particulièrement, un moteur du type diesel comprenant au moins un piston selon l'invention.

Ce moteur à combustion interne du type diesel présente un cylindre d'axe de révolution C dont l'extrémité supérieure est fermée par une culasse pourvue d'une face inférieure qui concourre à définir une chambre de combustion avec la face frontale du piston dont le bol de piston centré autour d'un axe de révolution B confondu avec l'axe C, ledit moteur comprenant, débouchant de la face inférieure de la culasse, au moins un conduit d'admission pouvant être obturé par une soupape d'admission et au moins un conduit d'échappement apte à être obturé par une soupape d'échappement, une bougie de préchauffage et un injecteur de carburant dont le nez débouche dans la chambre de combustion sensiblement au ni veau de l'axe de révolution du cylindre C.

D'autres caractéristiques et avantages de l'invention ressortiront clairement de la description du mode de réalisation qui en est faite ci-après, à titre indicatif et nullement limitatif, en référence aux figures suivantes :
- la figure 1 est une coupe schématique partielle d'un moteur à combustion interne selon l'invention;
- la figure 2 est une coupe partielle selon un plan contenant l'axe de révolution du bol de piston détaillant la tête d'un piston selon l'invention, côté admission.

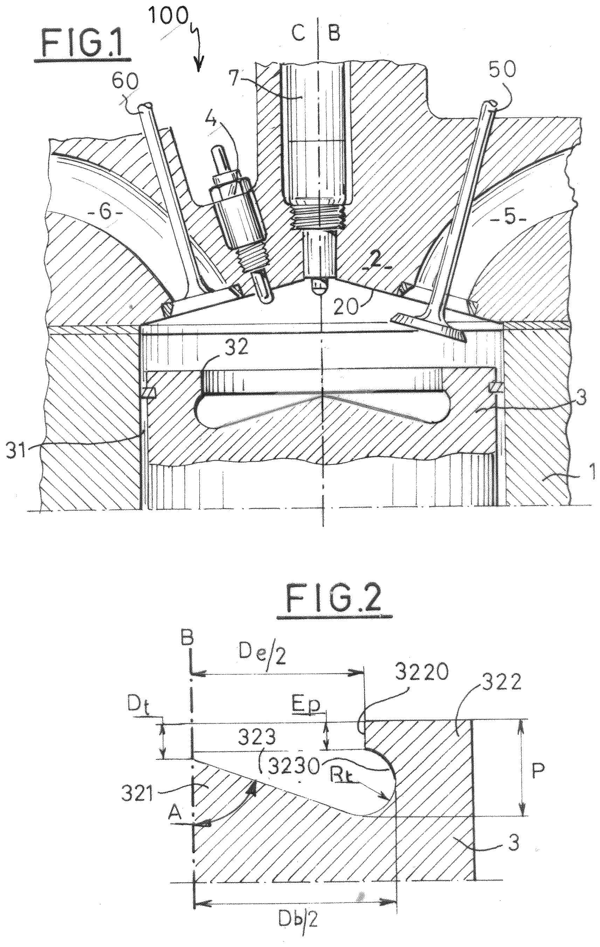

On a illustré, figure 1, un moteur à combustion interne 100, notamment pour moteur diesel, comprenant au moins un cylindre 1 d'axe de révolution C, une culasse 2 et un piston 3.

Dans la suite de la description, on considérera que cet axe de révolution C est orienté vers le haut, vers la culasse 2.

Le piston 3 est monté coulissant dans le cylindre 1 suivant axe de révolution du cylindre C, et présente un corps de piston apte à accueillir un axe pour lier le piston à une tête de bielle d'entraînement, ledit corps étant délimité latéralement par une jupe de piston 31 s'étendant parallèlement à l'axe de révolution du cylindre C et coopérant avec une paroi interne du cylindre 1, Le piston comprend en outre une face frontale 32 qui concourre avec la face inférieure 20 de la culasse 2 à délimiter une chambre de combustion du cylindre 1.

L'air frais ou un mélange d'air frais et de gaz d'échappement recirculés est admis dans la chambre de combustion par au moins un conduit d'admission 5 formé dans la culasse 2 et qui peut être obturé par au moins une soupape d'admission 50,

Les résidus de combustion du mélange air carburant introduit sont évacués par au moins un conduit d'échappement 6 formé dans la culasse 2, et qui peut être obturé par au moins une soupape d'échappement 60.

Une bougie de préchauffage 4 est implantée dans la culasse 2, son extrémité débouchant dans la chambre de combustion de manière à pouvoir chauffer le mélange air carburant lors de démarrages à froid.

Un injecteur de carburant 7 est implanté dans la culasse 2 et débouche dans la chambre de combustion sensiblement selon l'axe de révolution C du cylindre 1.

Comme représenté à la figure 2 qui détaille, en coupe partielle selon un plan axial, la partie supérieure d'un piston 3 selon l'invention, la face frontale 32 comprend un téton central 321, une couronne périphérique 322 et une cavité annulaire ou bol 323 d'axe de révolution B confondu avec l'axe de révolution du cylindre C, ledit bol 323 s'étendant du téton central 321 vers la couronne périphérique 322 à laquelle elle se raccorde.

En variante, le bol 323 peut être décentré dans le cylindre 1, les axes de révolution C du cylindre 1 et B du bol 323 pouvant alors être décentrés d'une distance de préférence inférieure à une valeur sensiblement égale à 3mm.

La couronne périphérique 322 s'étend latéralement de la jupe 31 du piston 3 vers l'axe de révolution B du bol 323 jusqu'à une extrémité formant une lèvre 3220 en dessous de laquelle le bol 323 présente un tore 3230 de profil en cul-de-four de rayon de courbure maximal Rt compris entre 5mm et 7mm et de préférence sensiblement égal à 6mm,

La lèvre 3220 est située à une distance De/2 de l'axe de révolution B du bol 323, la distante De étant comprise entre 49, 6mm et 51,5mm et de préférence sensiblement égale à 50mm.

Le tore 3230 est situé à une distance Db/2 de l'axe de révolution B du bol 323, la distance Db étant comprise entre 53, 8mm et 55,4mm et de préférence sensiblement égale à 54mm.

L'injecteur 7 est conçu pour injecter sélectivement du carburant sons forme de jets dirigés dans une région supérieure du tore 3230 adjacents à une arête inférieure de la lèvre 3220, également dénommée réentrant R de manière à améliorer le guidage du jet de carburant à partir de ce réentrant R par enroulement sur les parois du tore 3230 vers le fond du bol, où se trouve l'oxygène lors de la remontée du piston 3, afin de réduire les fumées et afin de préparer la circulation des gaz vers le téton central 321.

De préférence, on conservera un réentrant R en maintenant la différences des distances, par rapport à l'axe de révolution B du bol 323, de l'extrémité de la couronne De/2 et de l'extrémité du tore Db/2 sensiblement égale à 2mm.

De préférence, l'épaisseur Ep de la lèvre 3220 correspondant à la distance du réentrant R de la couronne périphérique 322 est comprise entre 4mm et 6mm et de préférence sensiblement égale à 5,3mm.

La profondeur maximale P du bol 323 est comprise entre 14,8mm et 16,2mm et de préférence sensiblement égale à 16,2mm. Le rapport Db/P confère au bol 323 une largeur importante qui permet une exploitation efficace de l'air à pleine charge, permettant d'atteindre des performances spécifiques élevées, même avec des taux de swirl peu importants limitant ainsi le risque de recouvrement des jets émis par l'injecteur 7.

La combinaison de cette définition du réentrant R, du tore 3230 et d'une profondeur maximale P du bol 323 permet un guidage du jet de carburant amélioré vers un volume d'air emprisonné au fond du bol 323.

Le sommet du téton central 321, situé sur l'axe de révolution 8 du bol 320, s'élève à une hauteur inférieure d'une distance Dt sous le niveau de la couronne périphérique 320, cette distance Dt étant comprise entre 5,4mm et 8mm et de préférence sensiblement égale à 7, 2mm, La distance Dt du sommet de la couronne périphérique 320 permet de limiter les interactions des jets de carburants projetés vers le fond du bol 320 avec le téton central 321 et notamment son sommet, permettant de réduire les émissions de fumées et de carburant imbrûlé.

La pente du téton central 321 d'angle A pris à partir de l'axe de révolution B du bol 320 dans le sens géométrique est compris entre 65° et 65,7° et est de préférence sensiblement égal à 65°.

L'utilisation d'une telle pente A de téton central 321 permet d'extraire les suies formées par la combustion au fond du bol 323 vers le téton central 321 pour une post-oxydation améliorée conduisant à une réduction des fumées.

Un moteur à combustion interne 100 pourvu d'un piston 3 combinant ces caractéristiques se révèle particulièrement avantageux à l'usage par rapport à un moteur à combustion interne pourvu d'un piston adapté à des normes de dépollution actuelles, du type Euro 4. Ces tests ont été réalisé avec un moteur 100 qui présente les caractéristiques additionnelles suivantes, un alésage de 85mm, un taux de compression voisin de 15 et un niveau de swirl au point mort bas Nd/N proche de 3.

En effet, sous des charges partielles et pour un même niveau de particules émises, ce moteur 100 émet des oxydes d'azote en quantité inférieure de 15% environ.

A puissance et température avant turbine TAVT constantes, à 4000 tr.min⁻¹ et à pleine charge, la quantité de fumées a été réduite, l'indice de noircissement des fumées étant réduit d'une valeur sensiblement égale à 0,5 fsn.

## Revendications

1. Piston (3) pour moteur à combustion interne, notamment pour moteur diesel, comprenant un corps délimité latéralement par une jupe (31) apte à coopérer avec les parois d'un cylindre (1) d'axe de révolution C dans lequel le piston (3) est apte à coulisser selon cet axe C, le dit piston (3) comportant une face frontale (32) qui comprend un téton central (321), une couronne périphérique (322) et un bol (323) d'axe de révolution B qui s'étend du téton central (321) vers la couronne périphérique (322), le bol (323) se raccordant à la couronne (322) au niveau d'une lèvre (3220) d'épaisseur Ep, en dessous de laquelle le bol 323 présente un tore 3230 de profil en cul-de-four sensiblement à l'aplomb de la lèvre (3220), de rayon de courbure maximal Rt apte à guider un carburant injecté sous la lèvre (3220) au niveau d'une zone de réentrant R vers le téton central (321), **caractérisé en ce que** le sommet du téton situé sur l'axe de révolution B du bol (323) s'élève à une hauteur inférieure d'une distance Dt sous le niveau de la couronne périphérique (320) comprise entre 5,4mm et 8mm et de préférence sensiblement égale à 7,2mm, le téton central présentant une pente vers le tore (323) d'angle A pris à partir de l'axe de révolution B du bol (320) dans le sens géométrique et compris entre 65° et 65,7° et étant de préférence sensiblement égal à 65°, et la profondeur maximale P du bol (323) étant comprise entre 14,8mm et 16,2mm et de préférence sensiblement égale à 16,2mm.

2. Piston (3) selon la revendication 1, **caractérisé en ce que** le bol (323) est centré dans le cylindre, l'axe de révolution B du bol (323) étant confondu avec l'axe de révolution C du cylindre (1).

3. Piston (3) selon la revendication 1 ou 2, **caractérisé en ce que** l'épaisseur Ep de la lèvre (3220) est comprise entre 4mm et 6mm et de préférence sensiblement égale à 5,3mm.

4. Piston (3) selon la revendication 1, 2 ou 3, **caractérisé en ce que** le rayon de courbure maximal Rt du tore (3230) est compris entre 5mm et 7mm et de préférence sensiblement égal à 6mm.

5. Piston (3) selon l'une des revendications précédentes **caractérisé en ce que** la lèvre (3220) est située à une distance De/2 de l'axe de révolution B du bol (323), la distance De étant comprise entre 49,6mm et 51,5mm et de préférence sensiblement égale à 50mm.

6. Piston (3) selon l'une des revendications précédentes **caractérisé en ce que** le tore (3230) est situé à une distance Db/2 de l'axe de révolution B du bol (323), la distance Db étant comprise entre 53,8mm et 55,4mm et de préférence sensiblement égale à 54mm.

7. Piston (3) selon l'une des revendications précédentes **caractérisé en ce que** la différence des distances, par rapport à l'axe de révolution B du bol (323), de l'extrémité de la couronne De/2 et de l'extrémité du tore Db/2 est sensiblement égale à 2mm.

8. Moteur (100) à combustion interne du type diesel **caractérisé en ce qu'**il comprend au moins un piston (3) selon l'une quelconque des revendications précédentes.

## Patentansprüche

1. Kolben (3) für eine Brennkraftmaschine, insbesondere für einen Dieselmotor, welcher einen Körper umfasst, der seitlich von einem Mantel (31) begrenzt wird, der geeignet ist, mit den Wänden eines Zylinders (1) mit einer Rotationsachse C zusammenzuwirken, in welchem der Kolben (3) entlang dieser Achse C gleiten kann, wobei der Kolben (3) eine Stirnseite (32) aufweist, welche einen zentralen Zapfen (321), einen Umfangskranz (322) und eine Mulde (323) mit einer Rotationsachse B, welche sich von dem zentralen Zapfen (321) zu dem Umfangskranz (322) erstreckt, umfasst, wobei sich die Mulde (323) an den Kranz (322) an einer Lippe (3220) mit einer Dicke Ep anschließt, unterhalb welcher die Mulde (323) einen Torus (3230) mit halbkuppelförmigem Profil im Wesentlichen senkrecht unter der Lippe (3220) mit einem maximalen Krümmungsradius Rt aufweist, der geeignet ist, einen Kraftstoff, der unter der Lippe (3220) an einem zurückspringenden Bereich R eingespritzt wird, in Richtung des zentralen Zapfens (321) zu lenken, **dadurch gekennzeichnet, dass** sich die Spitze des Zapfens, die sich auf der Rotationsachse B der Mulde (323) befindet, bis zu einer Höhe erhebt, die um einen Abstand Dt niedriger als die Ebene des Umfangskranzes (320) ist, der zwischen 5,4 mm und 8 mm liegt und vorzugsweise im Wesentlichen gleich 7,2 mm ist, wobei der zentrale Zapfen eine Neigung in Richtung des Torus (323) mit einem Winkel A, von der Rotationsachse B der Mulde (320) aus im geometrischen Sinne betrachtet, aufweist, der zwischen 65° und 65,7° liegt und vorzugsweise im Wesentlichen gleich 65° ist, und wobei die maximale Tiefe P der Mulde (323) zwischen 14,8 mm und 16,2 mm liegt und vorzugsweise im Wesentlichen gleich 16,2 mm ist.

2. Kolben (3) nach Anspruch 1, **dadurch gekennzeichnet, dass** die Mulde (323) in dem Zylinder zentriert ist, wobei die Rotationsachse B der Mulde (323) mit der Rotationsachse C des Zylinders (1) zusammenfällt.

3. Kolben (3) nach Anspruch 1 oder 2, **dadurch gekennzeichnet, dass** die Dicke Ep der Lippe (3220) zwischen 4 mm und 6 mm liegt und vorzugsweise im Wesentlichen gleich 5,3 mm ist.

4. Kolben (3) nach Anspruch 1, 2 oder 3, **dadurch gekennzeichnet, dass** der maximale Krümmungsradius Rt des Torus (3230) zwischen 5 mm und 7 mm liegt und vorzugsweise im Wesentlichen gleich 6 mm ist.

5. Kolben (3) nach einem der vorhergehenden Ansprüche, **dadurch gekennzeichnet, dass** sich die Lippe (3220) in einem Abstand De/2 von der Rotationsachse B der Mulde (323) befindet, wobei der Abstand De zwischen 49,6 mm und 51,5 mm liegt und vorzugsweise im Wesentlichen gleich 50 mm ist.

6. Kolben (3) nach einem der vorhergehenden Ansprüche, **dadurch gekennzeichnet, dass** sich der Torus (3230) in einem Abstand Db/2 von der Rotationsachse B der Mulde (323) befindet, wobei der Abstand Db zwischen 53,8 mm und 55,4 mm liegt und vorzugsweise im Wesentlichen gleich 54 mm ist.

7. Kolben (3) nach einem der vorhergehenden Ansprüche, **dadurch gekennzeichnet, dass** die Differenz der Abstände, bezogen auf die Rotationsachse B der Mulde (323), des Endes des Kranzes De/2 und des Endes des Torus Db/2 im Wesentlichen gleich 2 mm ist.

8. Brennkraftmaschine (100) vom Typ eines Dieselmotors, **dadurch gekennzeichnet, dass** sie wenigstens einen Kolben (3) nach einem der vorhergehenden Ansprüche umfasst.

## Claims

1. Piston (3) for an internal combustion engine, in particular for a diesel engine, comprising a body delimited laterally by a skirt (31) capable of cooperating with the walls of a cylinder (1) of axis of revolution C in which the piston (3) can slide according to this axis C, said piston (3) comprising a front-end face (32) which comprises a central dog point (321), a peripheral crown ring (322) and a bowl (323) of axis of revolution B which extends from the central dog point (321) to the peripheral crown ring (322), the bowl (323) being connected to the crown ring (322) at a lip (3220) of thickness Ep, below which the bowl (323) has a torus (3230) of half-dome profile substantially directly below the lip (3220), of maximum radius of curvature Rt capable of guiding a fuel injected under the lip (3220) in a reentrant zone R towards the central dog point (321), **characterized in that** the apex of the dog point situated on the axis of revolution B of the bowl (323) rises to a height less than a distance Dt under the level of the peripheral crown ring (320) of between 5.4 mm and 8 mm and preferably substantially equal to 7.2 mm, the central dog point having a slope towards the torus (323) of angle A taken from the axis of revolution B of the bowl (320) in the geometrical sense and between 65° and 65.7° and being preferably substantially equal to 65°, and the maximum depth P of the bowl (323) being between 14.8 mm and 16.2 mm and preferably substantially equal to. 16.2 mm.

2. Piston (3) according to Claim 1, **characterized in that** the bowl (323) is centred in the cylinder, the axis of revolution B of the bowl (323) coinciding with the axis of revolution C of the cylinder (1).

3. Piston (3) according to Claim 1 or 2, **characterized in that** the thickness Ep of the lip (3220) is between 4 mm and 6 mm and preferably substantially equal to 5.3 mm.

4. Piston (3) according to Claim 1, 2 or 3, **characterized in that** the maximum radius of curvature Rt of the torus (3230) is between 5 mm and 7 mm and preferably substantially equal to 6 mm.

5. Piston (3) according to one of the preceding claims, **characterized in that** the lip (3220) is situated at a distance De/2 from the axis of revolution B of the bowl (323), the distance De being between 49.6 mm and 51.5 mm and preferably substantially equal to 50 mm.

6. Piston (3) according to one of the preceding claims, **characterized in that** the torus (3230) is situated at a distance Db/2 from the axis of revolution B of the bowl (323), the distance Db being between 53.8 mm and 55.4 mm and preferably substantially equal to 54 mm.

7. Piston (3) according to one of the preceding claims, **characterized in that** the difference in the distances, relative to the axis of revolution B of the bowl (323), from the end of the crown ring De/2 and from the end of the torus Db/2 is substantially equal to 2 mm.

8. Internal combustion engine (100) of diesel type, **characterized in that** it comprises at least one piston (3) according to any one of the preceding claims.
